# FASCICULE DE BREVET EUROPEEN

(11) **EP 0 481 858 B1**
(45) Date de publication et mention de la délivrance du brevet: **19.07.1995**
(21) Numéro de dépôt: 91402724.8
(22) Date de dépôt: 11.10.1991
(51) Int. Cl.: B01D 46/14

(54) **Filtre collecteur d'aérosols autochauffant pour pyrolyse**
Selbstheizender Aerosolfilter für Pyrolyse
Self-heating collecting aerosol filter for pyrolysis

(30) Priorité: 15.10.1990 FR 9012678
(43) Date de publication de la demande: 22.04.1992
(73) Titulaire: AEROSPATIALE Société Nationale Industrielle, 75781 Paris Cédex 16 (FR)
(72) Inventeur: Claramonte, Manuel, F-92370 Chaville (FR); Auffret, Jean-Claude, F-78130 Chapet (FR)
(74) Mandataire: Dubois-Chabert, Guy

(56) Documents cités:
- EP-A- 0 382 704
- EP-A- 0 393 729
- DE-A- 2 536 271
- GB-A- 2 099 321

## Description

L'invention se rapporte à un filtre autochauffant destiné à capter et à pyrolyser des aérosols. Il peut être utilisé dans le domaine spatial pour des expériences d'analyse de l'atmosphère et plus particulièrement pour des expériences embarquées où les volumes et les masses accordés sont très limités parce que très chers ; c'est le cas des expériences d'analyse de l'atmosphère d'une planète dans le cadre de l'exploration du système solaire.

En général, les dispositifs connus servant à capter et à pyrolyser des aérosols sont constitués d'un capteur proprement dit dont le rôle est de piéger les aérosols ; ce capteur est un filtre métallique dont le diamètre des pores est choisi en fonction du diamètre des aérosols que l'on veut retenir pour l'analyse. Le second élément est une résistance chauffante.

Pour obtenir le meilleur rendement de chauffage, la résistance chauffante est logée à l'intérieur du filtre métallique ; cet ensemble est alors placé dans une enceinte thermiquement isolée pour permettre au filtre contenant les aérosols d'atteindre la température de pyrolyse qui, selon les cas, peut s'élever à près de 1000°C.

Pour des raisons technologiques pratiquement incontournables, ce concept conduit à réaliser un filtre cylindrique de section circulaire et une résistance chauffante lovée en hélice à l'intérieur du filtre cylindrique.

Ces dispositifs présentent un certain nombre d'inconvénients. En particulier, ils représentent une part importante en masse de l'intrumentation relative à l'expérience, embarquée sur un satellite ou tout autre engin spatial et présentent un temps relativement grand pour atteindre la température de pyrolyse désirée sur le filtre, une consommation importante d'énergie électrique pour le chauffage du filtre et une surface de captation des aérosols trop petite pour un encombrement donné.

Le document EP-A-0 382 704 divulgue un filtre autochauffant apte à capter et à pyrolyser des aérosols. Le filtre est cylindrique, de section circulaire et est en matériau électriquement conducteur. Le chauffage est obtenu par passage d'un courant électrique dans le filtre.

On connaît d'autre part, par le document GB-A-2 099 321, un filtre pour moteur Diesel à éléments chauffants rapportés, ce filtre ayant une section en forme d'étoile.

Un filtre à section en forme d'étoile est également divulgué par le document DE-A-2 536 271. Ce filtre, en matériau fritté, est non chauffant.

La présente invention a justement pour objet un filtre collecteur d'aérosols autochauffant pour pyrolyse permettant de remédier à ces différents inconvénients. Ce filtre monobloc permet une amélicration des performances des dispositifs connus par une diminution de poids, de temps et d'énergie nécessaire au chauffage ainsi qu'une augmentation de la surface active pour un même encombrement que les dispositifs connus.

Le principe de l'invention permettant ces améliorations consiste à s'affranchir de la résistance chauffante indépendante du filtre métallique, en faisant jouer à ce dernier le rôle d'élément chauffant et de tirer profit du volume ainsi libéré à l'intérieur du filtre pour lui donner une forme permettant d'augmenter sa surface de captation des aérosols.

De façon plus précise, l'invention a pour objet un filtre autochauffant pour capter et pyrolyser des aérosols, comportant un corps cylindrique pourvu d'un axe de révolution, réalisé en un matériau conducteur de l'électricité et comportant des pores pour l'entrée des aérosols, ce corps comportant une première extrémité fermée et une seconde extrémité pourvue d'ouvertures, des moyens de connexion électrique étant prévus pour relier le corps du filtre à une alimentation électrique, caractérisé en ce que le corps cylindrique a sa section perpendiculaire audit axe en forme d'étoile dont les côtés des branches définissent autant de faces latérales du corps cylindrique, les faces latérales d'une même branche étant réunies au sommet de la branche par un joint isolant, un joint isolant reliant les faces latérales en regard et appartenant à deux branches adjacentes, la première extrémité du corps cylindrique étant fermée d'une part par un matériau électriquement conducteur couvrant chaque branche de l'étoile et assurant la continuité électrique entre les faces latérales de chaque branche et, d'autre part, par une plaque électriquement isolante et bouchant le centre de l'étoile, des moyens électriquement conducteurs étant prévus à la seconde extrémité du corps cylindrique pour relier électriquement chaque face latérale d'une branche à la face latérale qui lui est en regard et qui appartient à une branche adjacente à l'exception de deux branches adjacentes qui reçoivent lesdits moyens de connexion électrique.

De façon avantageuse, le corps cylindrique est conçu de façon que le courant circule en sens inverse dans deux faces latérales adjacentes, des joints isolants électriquement étant prévus entre les arêtes contiguës des faces latérales adjacentes, parallèles à l'axe pour rendre ces faces latérales solidaires.

La continuité électrique est assurée en réalisant les branches de l'étoile à la première extrémité ainsi que les surfaces prévues entre les branches de l'étoile à la seconde extrémité en un matériau conducteur de l'électricité, sauf cependant la surface située entre les branches de l'étoile où arrive et sort le courant électrique qui est alors réalisée en un matériau isolant électrique.

Cette architecture présente l'avantage d'augmenter le chemin parcouru par le courant électrique dans le filtre, augmentant ainsi la valeur de la résistance électrique, et permet donc finalement de diminuer l'intensité à délivrer pour le chauffage. En effet, la résistivité électrique du filtre, bien que plus élevée que celle du métal à cause de sa structure poreuse, est malgré tout assez faible ; il faut donc ajuster la longueur du chemin parcouru par le courant électrique pour augmenter la résistance.

La première extrémité du filtre peut être fermée par une pièce rapportée sur le corps du filtre présentant une forme en étoile superposable à celle du corps. La continuité électrique entre cette pièce et le corps cylindrique du filtre est alors assurée par soudure, les branches de cette pièce étant réalisées bien entendu en matériau conducteur.

De même, les surfaces conductrices prévues entre les branches de l'étoile à la seconde extrémité du filtre peuvent être réalisées en un matériau différent de celui du corps cylindrique. La continuité électrique est alors assurée à nouveau par soudures de ces surfaces conductrices sur les branches de l'étoile du corps cylindrique.

Toutefois, de façon avantageuse, les branches de l'étoile de la première extrémité, les faces latérales du corps cylindrique et les surfaces interbranches de la seconde extrémité sont réalisées dans une seule et même pièce conductrice de l'électricité. En effet, l'ensemble de ces branches, faces latérales et surfaces interbranches conductrices constitue une surface déployable. Il est alors possible de réaliser ces différentes parties dans une plaque plate, d'y découper la surface déployable et de la plier pour former les différentes parties du filtre.

Cette technique permet une simplification de fabrication par suppression de soudures et donc une réduction du coût du filtre.

Les polygones centraux qui portent les branches de l'étoile à ces deux extrémités peuvent en revanche, être en matériau isolant électrique.

D'autres caractéristiques et avantages de l'invention ressortiront mieux de la description qui va suivre, donnée à titre illustratif et non limitatif, en référence aux dessins dans lesquels :
- la figure 1 est une vue partielle en perspective du filtre autochauffant conforme à l'invention,
- la figure 2 est une vue de dessus du filtre de la figure 1,
- la figure 3 est une vue de dessous du filtre de la figure 1,
- la figure 4 est une coupe selon le plan IV-IV de la figure 1,
- la figure 5 illustre la continuité électrique, schématiquement, entre les faces latérales du filtre de l'invention, et
- la figure 6 illustre schématiquement la fabrication du filtre de l'invention dans une même plaque conductrice.

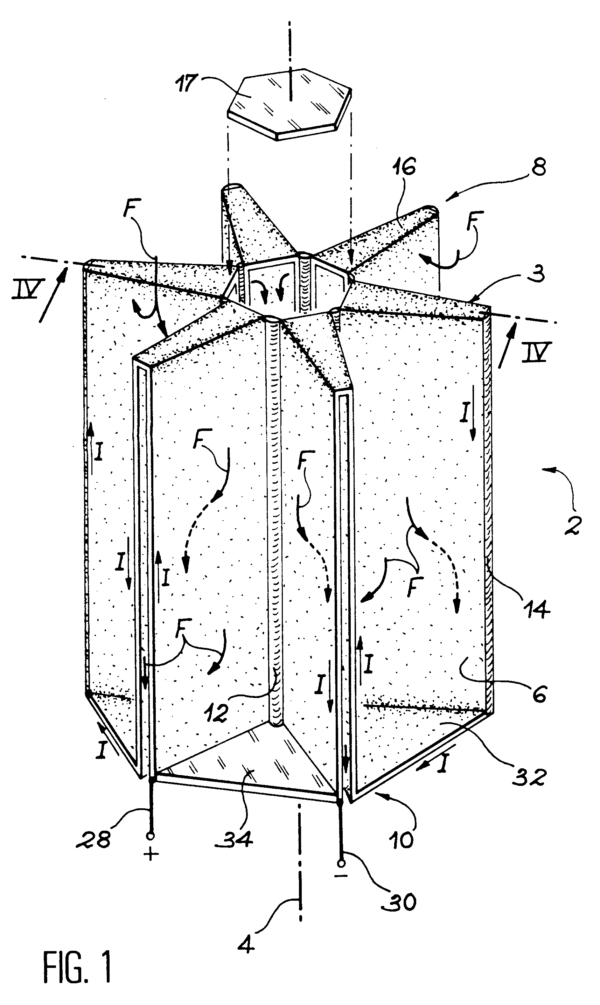

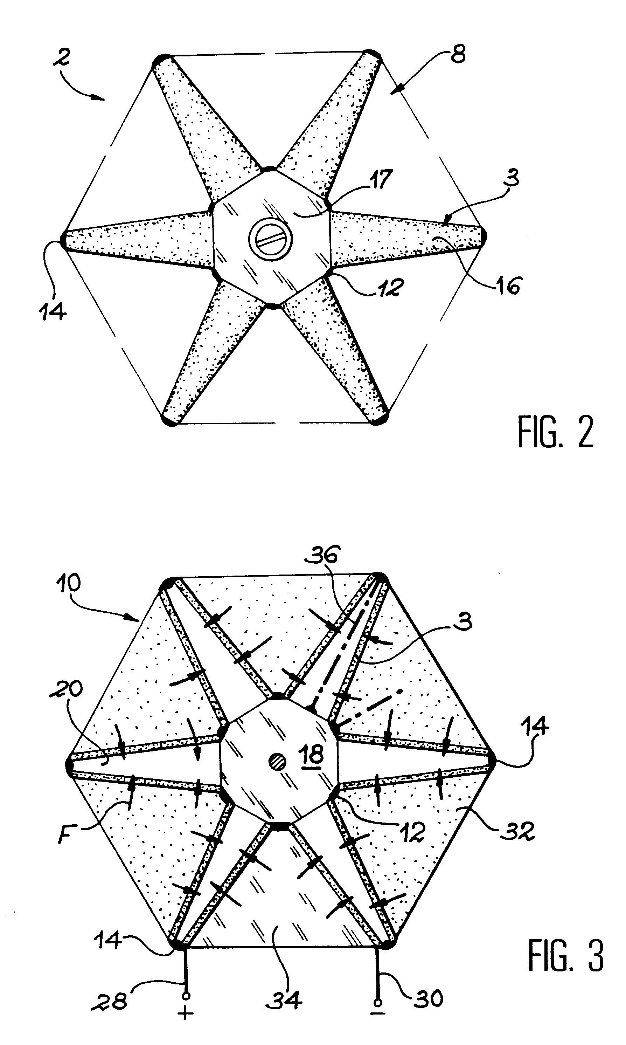

En référence aux figures 1 à 3, le filtre autochauffant conforme à l'invention comporte un corps cylindrique 2 dont la section est une étoile. La référence 3 indique les branches de l'étoile et la référence 4 indique l'axe de révoluton du cylindre.

Le nombre de branches 3 de l'étoile dépend de l'encombrement disponible pour le filtre et de différentes contraintes extérieures. Sur les figures, le nombre de branches est égal à six.

La partie active du filtre est constituée par les faces latérales 6 du cylindre 2, ayant la forme de rectangles et rejoignant les côtés des branches 3 de l'étoile constituant respectivement l'extrémité supérieure 8 et l'extrémité inférieure 10 du corps 2. Ces faces latérales 6 sont réalisées en un matériau chauffant, conducteur de l'électricité, et comportent des pores choisis en fonction du diamètre des aérosols que l'on veut piéger en vue de les analyser.

Les faces latérales 6 du filtre sont solidaires les unes des autres. A cet effet, des joints intérieurs 12, isolants électriquement, sont prévus entre les arêtes internes des faces latérales 6 adjacentes et des joints externes 14 entre les arêtes externes des faces latérales adjacentes. Ces joints 12 et 14 s'étendent tout le long des arêtes des faces 6, parallèlement à l'axe 4 du corps 2.

L'extrémité supérieure 8 du corps 2, sur le dessin, est fermée alors que l'extrémité inférieure 10, sur le dessin, est ouverte.

Les branches 3 de l'étoile à l'extrémité supérieure 8 du corps sont fermées et réalisées en matériau 16, chauffant conducteur de l'électricité alors que la partie centrale polygonale 17 de l'étoile, fermant cette extrémité supérieure, est réalisée en un matériau isolant électrique. La fixation de la plaque polygonale 17 sur le matériau conducteur 16 des branches de l'étoile est assurée par les joints 12 isolants électriques à chaque sommet du polygone.

La pièce isolante polygonale 17 est inscrite dans l'étoile et les côtés du polygone sont accolés aux bases des triangles conducteurs 16 de l'étoile.

La plaque polygonale 17 (ici un hexagone) est pleine alors que les triangles conducteurs 16 peuvent être poreux comme les faces latérales 6 du corps cylindrique 2. Elles font alors partie intégrante de la surface active du filtre.

A l'extrémité inférieure 10, on trouve aussi une plaque polygonale 18 (ici hexagonale) en matériau isolant électrique inscrite dans l'étoile. Les branches 3 de l'étoile sont ouvertes à cette extrémité inférieure. Le polygone inférieur 18 est solidaire du corps 2 à l'aide des joints isolants 12 à chaque sommet du polygone. Les côtés du polygone 18 sont contigus à la base des branches ouvertes 3 de l'étoile. Les espaces ouverts triangulaires des branches 3 portent la référence 20.

L'écoulement du gaz contenant les aérosols, à travers le filtre, est indiqué par les flèches F. Ce gaz entre par les pores des faces latérales 6 et par les pores des surfaces triangulaires conductrices 16 de l'extrémité supérieure du filtre, de l'extérieur vers l'intérieur du filtre, puis sort par les ouvertures 20 à l'extrémité inférieure 10 du filtre.

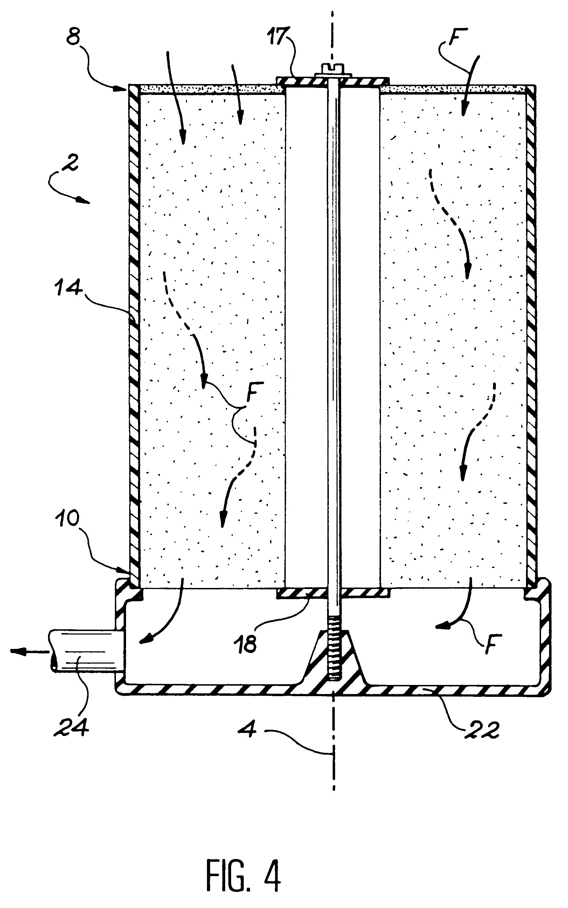

Les écoulements de gaz circulant individuellement dans les branches 3 du corps en étoile sont rassemblés, comme représenté sur la figure 4, dans un collecteur 22 rendu solidaire de l'extrémité inférieure 10 du corps 2 par exemple par vissage selon l'axe de révolution 4 du corps. Ce collecteur 22 est muni d'une conduite latérale de sortie 24 sur laquelle est montée une pompe (non représentée) servant à l'évacuation vers l'extérieur des gaz et à la compensation des pertes de charges du filtre.

Afin d'assurer le chauffage du filtre, des fils électriques 28 et 30, destinés respectivement à être branchés aux bornes + et - d'une source continue d'alimentation électrique (non représentée), sont soudés sur deux branches 3 successives de l'étoile, à l'extrémité inférieure 10.

Afin de mieux voir l'écoulement des gaz dans le filtre, les joints externes 14 ont été omis sur la figure 1, aux extrémités des branches 3 de l'étoile équipées des amenée et sortie de courant 28 et 30.

Le courant électrique destiné au chauffage du filtre parcourt l'ensemble du filtre en montant dans une face latérale 6 puis en redescendant par la face latérale 6 adjacente. La circulation du courant est représentée par les flèches I sur la figure 1.

La continuité électrique entre deux faces latérales 6 accolées par un joint externe 14, fixant en fait la forme des branches 3 de l'étoile, est assurée par la surface conductrice triangulaire 16 des branches de l'étoile à l'extrémité supérieure du corps 2.

Afin d'assurer la continuité électrique entre deux branches 3 de l'étoile à l'extrémité inférieure 10 du corps, une surface triangulaire 32 conductrice de l'électricité est prévue entre les branches 3 de l'étoile à l'exception d'une surface triangulaire isolante 34 entre les branches équipées des fils électriques de chauffage 28 et 30.

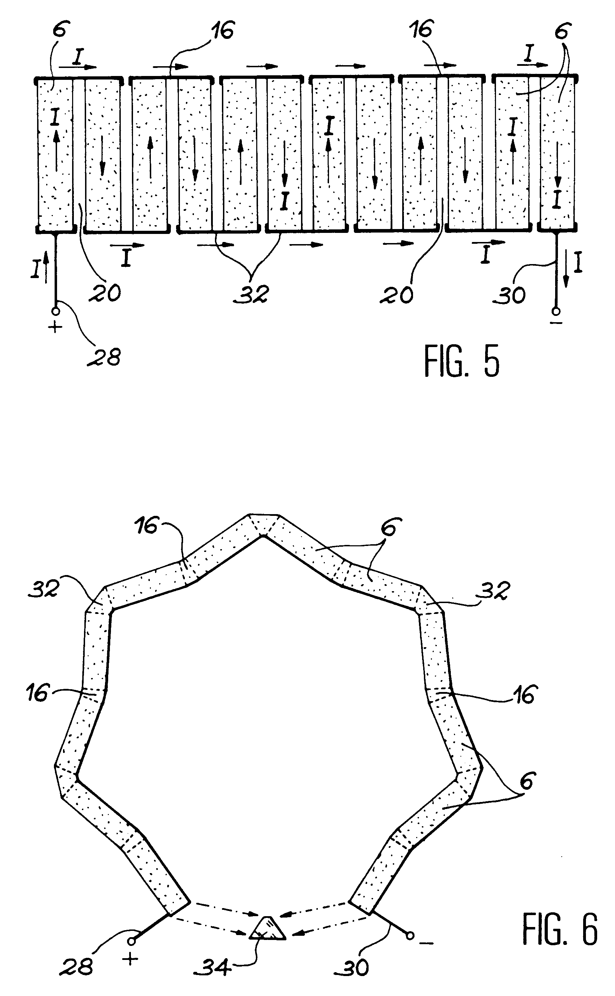

La figure 5 permet d'illustrer le cheminement électrique dans le filtre.

Les faces latérales 6, les triangles conducteurs 12 des branches 3 de l'étoile et les surfaces triangulaires conductrices 32 sont réalisés par exemple en acier inoxydable. Ils sont fabriqués, comme représenté sur la figure 6, par découpage dans une plaque poreuse en acier inoxydable appropriée puis formés par pliage pour obtenir le filtre. Enfin, l'assemblage des faces 6 est réalisé par les joints isolants 12 et 14. Ces joints isolants sont constitués en particulier par un ciment réfractaire isolant.

Afin d'éviter un court-circuit entre les faces adjacentes 6 du filtre, il est possible d'équiper les branches 3 de l'étoile de cloisons 36 isolantes électriquement, disposées selon la médiane des branches triangulaires 3 (direction radiale). Ces cloisons 36 s'étendent de la pointe à la base des branches triangulaires 3 et de l'extrémité 8 à l'extrémité 10 du corps 2. Ces cloisons 36 sont réalisées en un matériau réfractaire isolant. De même, les surfaces polygonales 17 et 18 sont réalisées en céramique.

La réalisation des polygones inférieur et supérieur 17 et 18 en matériau non conducteur de l'électricité permet au courant de bien passer d'une face à l'autre du filtre, sans court-circuit radial.

A titre d'exemple, il a été réalisé un filtre autochauffant dans une plaque d'acier inoxydable de 0,5mm d'épaisseur, poreuse à 60%. Ce filtre comportait 6 branches.

La description donnée précédemment n'a bien entendu été donnée qu'à titre illustratif ; toute modification sans pour autant sortir du cadre de l'invention pouvant être envisagée. En particulier, le nombre de branches de l'étoile peut être inférieur ou supérieur à 6, l'extrémité inférieure 10 peut présenter une forme extérieure circulaire au lieu d'une forme hexagonale et les faces latérales, les triangles conducteurs 16 et les triangles conducteurs 32 être réalisés dans des pièces et matériaux différents soudés.

## Revendications

1. Filtre autochauffant pour capter et pyrolyser des aérosols, comportant un corps cylindrique (2) pourvu d'un axe de révolution (4), réalisé en un matériau conducteur de l'électricité et comportant des pores pour l'entrée des aérosols, ce corps comportant une première extrémité (8) fermée et une seconde extrémité (10) pourvue d'ouvertures (20), des moyens de connexion électrique étant prévus pour relier le corps du filtre à une alimentation électrique, caractérisé en ce que le corps cylindrique (2) a sa section perpendiculaire audit axe (4) en forme d'étoile dont les côtés des branches (3) définissent autant de faces latérales du corps cylindrique, les faces latérales (6) d'une même branche (3) étant réunies au sommet de la branche par un joint isolant (14), un joint isolant (12) reliant les faces latérales en regard et appartenant à deux branches (3) adjacentes, la première extrémité (8) du corps cylindrique étant fermée d'une part par un matériau électriquement conducteur couvrant chaque branche de l'étoile et assurant la continuité électrique entre les faces latérales de chaque branche et, d'autre part, par une plaque électriquement isolante (17) et bouchant le centre de l'étoile, des moyens (32) électriquement conducteurs étant prévus à la seconde extrémité (10) du corps cylindrique (2) pour relier électriquement chaque face latérale d'une branche à la face latérale qui lui est en regard et qui appartient à une branche adjacente à l'exception de deux branches adjacentes qui reçoivent lesdits moyens de connexion électrique (28, 30).

2. Filtre selon la revendication 1, caractérisé en ce que le matériau électriquement conducteur couvrant chaque branche de l'étoile de la première extrémité (8) du corps cylindrique est le même matériau que celui du corps cylindrique (2).

3. Filtre selon l'une des revendication 1 ou 2, caractérisé en ce que les moyens électriquement conducteurs prévus à la seconde extrémité du corps cylindrique (2) sont réalisés dans le même matériau que celui du corps cylindrique (2) et constituent des surfaces (32) qui ferment l'espace compris entre les branches.

4. Filtre selon les revendications 2 et 3 prises ensemble, caractérisé en ce que les faces latérales (6) du corps, les couvertures (16) de branches de la première extrémité du corps et les surfaces (32) de fermeture de la seconde extrémité du corps sont réalisées dans une seule et même pièce (figure 6).

5. Filtre selon l'une quelconque des revendications 1 à 4, caractérisé en ce que des cloisons (36) isolantes électriquement sont prévues dans les branches (3) de l'étoile, pour séparer les faces latérales adjacentes délimitant lesdites branches, ces cloisons (36) s'étendant de la première (8) à la seconde extrémité (10) du corps selon une direction radiale.

6. Filtre selon l'une quelconque des revendications 1 à 5, caractérisé en ce que les branches (3) de l'étoile à la seconde extrémité sont totalement ouvertes et constituent lesdites ouvertures (20).

7. Filtre selon la revendication 6, caractérisé en ce que la seconde extrémité (10) comporte une surface polygonale centrale (18) fixée aux branches ouvertes (20) de l'étoile et réalisée en un matériau isolant électrique.

8. Filtre selon l'une quelconque des revendications précédentes, caractérisé en ce que les branches adjacentes de la seconde extrémité qui reçoivent lesdits moyens de connexion électrique (28, 30) sont réunies par une surface isolante (34).

## Claims

1. Self-heating filter for capturing and pyrolysing aerosols, having a cylindrical body (2) with an axis of revolution (4), produced from an electrically conductive material and having pores for the entry of the aerosols, this body having a first, closed end (8), and a second end (10) provided with openings (20), electrical connection means being provided for connecting the body of the filter to an electrical supply, characterised in that the cross section of the cylindrical body (2) perpendicular to the said axis (4) is in the shape of a star, the sides of whose arms (3) define the same number of lateral faces of the cylindrical body, the lateral faces (6) of any one arm (3) being joined at the point of the arm by an insulating joint (14), an insulating joint (12) connecting the facing lateral faces belonging to two adjacent arms (3), the first end (8) of the cylindrical body being closed, on the one hand, by an electrically conductive material covering each arm of the star and providing electrical continuity between the lateral faces of each arm and, on the other hand, by an electrically insulating plate (17) closing off the centre of the star, electrically conductive means (32) being provided at the second end (10) of the cylindrical body (2) for electrically connecting each lateral face of an arm to the lateral face facing it which belongs to an adjacent arm with the exception of two adjacent arms which receive the said electrical connection means (28, 30).

2. Filter according to Claim 1, characterised in that the electrically conductive material covering each arm of the star at the first end (8) of the cylindrical body is the same material as that of the cylindrical body (2).

3. Filter according to one of Claims 1 or 2, characterised in that the electrically conductive means provided at the second end of the cylindrical body (2) are produced from the same material as that of the cylindrical body (2) and form surfaces (32) which close off the space between the arms.

4. Filter according to Claims 2 and 3 taken together, characterised in that the lateral faces (6) of the body, the covers (16) of arms of the first end of the body and the surfaces (32) closing off the second end of the body are produced in one single piece (Figure 6).

5. Filter according to any one of Claims 1 to 4, characterised in that electrically insulating partitions (36) are provided in the arms (3) of the star, to separate the adjacent lateral faces delimiting the said arms, these partitions (36) extending from the first (8) to the second (10) end of the body in a radial direction.

6. Filter according to any one of Claims 1 to 5, characterised in that the arms (3) of the star at the second end are completely open and form the said openings (20).

7. Filter according to Claim 6, characterised in that the second end (10) has a central polygonal surface (18) fixed to the open arms (20) of the star and produced from an electrically insulating material.

8. Filter according to any one of the preceding claims, characterised in that the adjacent arms of the second end which receive the said electrical connection means (28, 30) are joined together by an insulating surface (34).

## Patentansprüche

1. Automatisch beheizbares Filter zum Sammeln und Pyrolysieren von Aerosolen, umfassend ein mit einer Drehachse (4) versehenes zylindrisches Gehäuse (2), das aus elektrisch leitfähigem Material hergestellt ist und Poren für den Eintritt der Aerosole enthält, wobei dieses Gehäuse ein verschlossenes erstes Ende (8), ein mit Öffnungen (20) versehenes zweites Ende (10) und elektrische Anschlußmittel umfaßt, die vorgesehen sind, das Filtergehäuse mit einer Stromversorgung zu verbinden, **dadurch gekennzeichnet, daß** der senkrecht zur Achse (4) stehende Querschnitt des zylindrischen Gehäuses (2) die Form eines Sternes besitzt, dessen Seiten der Arme (3) ebensoviele Seitenflächen des zylindrischen Gehäuses bilden, wobei die Seitenflächen (6) ein und desselben Armes (3) in dessen Scheitel durch eine Isolierverbindung (14) verbunden sind, eine Isolierverbindung (12) die gegenüberliegenden und zu zwei benachbarten Armen (3) gehörenden Seitenflächen verbindet, das erste Ende (8) des zylindrischen Gehäuses einerseits mit einem elektrisch leitfähigen Material, das jeden Arm des Sterns bedeckt und die elektrische Kontinuität zwischen den Seitenflächen jedes Arms sicherstellt, und andererseits mit einer elektrisch isolierenden, das Zentrum des Sterns bedeckenden Platte (17) verschlossen ist und am zweiten Ende (10) des zylindrischen Gehäuses (2) elektrisch leitfähige Mittel (32) vorgesehen sind, um jede Seitenfläche eines Armes mit der ihr gegenüberliegenden Seitenfläche, die zu einem benachbarten Arm gehört, elektrisch zu verbinden, mit Ausnahme der beiden benachbarten Arme, welche die elektrischen Anschlußmittel (28, 30) enthalten.

2. Filter nach Anspruch 1, **dadurch gekennzeichnet, daß** das elektrisch leitfähige Material, welches jeden Sternarm des ersten Endes (8) des zylindrischen Gehäuses bedeckt, dasselbe Material wie das des zylindrischen Gehäuses (2) ist.

3. Filter nach Anspruch 1 oder 2, **dadurch gekennzeichnet, daß** die am zweiten Ende des zylindrischen Gehäuses (2) vorgesehenen elektrisch leitfähigen Mittel aus demselben Material wie dem des zylindrischen Gehäuses (2) hergestellt sind und Flächen (32) bilden, welche den zwischen den Armen vorhandenen Zwischenraum verschließen.

4. Filter nach Anspruch 2 und 3, **dadurch gekennzeichnet, daß** die Seitenflächen (6) des Gehäuses, die Bedeckung (16) der Arme des ersten Endes des Gehäuses und die Verschlußflächen (32) des zweiten Endes des Gehäuses aus ein und demselben Stück (Fig. 6) hergestellt sind.

5. Filter nach einem der Ansprüche 1 bis 4, **dadurch gekennzeichnet, daß** in den Armen (3) des Sterns zur Trennung der benachbarten Seitenflächen, welche diese Arme begrenzen, elektrisch isolierende Zwischenwände (36) vorgesehen sind, wobei sich diese Zwischenwände (36) in einer radialen Richtung vom ersten (8) zum zweiten Ende (10) des Gehäuses erstrecken.

6. Filter nach einem der Ansprüche 1 bis 5, **dadurch gekennzeichnet, daß** die Arme (3) des Sterns am zweiten Ende vollständig offen sind und die Öffnungen (20) bilden.

7. Filter nach Anspruch 6, **dadurch gekennzeichnet, daß** das zweite Ende (10) eine zentrale polygonale Fläche (18) enthält, die an den offenen Armen (20) des Sterns befestigt und aus einem elektrisch isolierenden Material hergestellt ist.

8. Filter nach einem der vorhergehenden Ansprüche, **dadurch gekennzeichnet, daß** die benachbarten Arme des zweiten Endes, welche die elektrischen Anschlußmittel (28, 30) enthalten, über eine Isolationsfläche (34) miteinander verbunden sind.
